# EUROPEAN PATENT SPECIFICATION

(11) **EP 2 289 063 B1**
(45) Date of publication and mention of the grant of the patent: **14.12.2011**
(21) Application number: 08874691.2
(22) Date of filing: 18.12.2008
(51) Int. Cl.: G09F 9/30, G09G 3/20, G06F 3/048

(54) **INFORMATION PRESENTATION DEVICE**
INFORMATIONSPRÄSENTATIONSEINRICHTUNG
DISPOSITIF DE PRÉSENTATION D'INFORMATIONS

(30) Priority: 19.06.2008 US 142218; 23.10.2008 US 256983; 23.10.2008 US 256955
(43) Date of publication of application: 02.03.2011
(73) Proprietor: Sony Ericsson Mobile Communications AB, 221 88 Lund (SE)
(72) Inventor: KUIKEN, Martijn, NL-9641AZ Veendam (NL); WEINANS, Erwin, NL-7871PH Klijndijk (NL); DE JONG, Dick, NL-7827BW Emmen (NL)
(74) Representative: Schwarz, Markku
(86) International application number: PCT/EP2008/067878
(87) International publication number: WO 2009/152879

(56) References cited:
- WO-A-98/14863
- US-A1- 2005 140 565
- US-A1- 2006 129 951
- US-A1- 2007 247 439
- US-B1- 6 215 480

## Description

### TECHNICAL FIELD

The present invention relates in general to a method and a device for presentation of information and in particular to a method and a device for presentation of information in dependence of changes in rotation of an information presentation device.

### BACKGROUND

Information presentation units, such as displays, are comprised in a large variety of portable electronic devices, not to mention mobile phones.

The size of mobile phones has roughly decreased over the past years, whereas the size of the information presentation units has increased,

An alternative to presenting information on one large display, presenting information on two or more displays has also been used, for example on either side on a mobile phone.

However, there is a demand for even larger displays or screens for presentation of information.

One way to provide such screens or displays is to provide a phone having two parts that are slidable in relation to one another, wherein for instance the upper part comprises at least one display.

From US 6215 480 B1 it is known a dynamic cylindrical display for pen-sized computing comprising a cylindrical display for presentation of information upon rotation giving the visual feel of rolling a cylindrical magnifying glass across a finely printed document.

US 2007/247439 A1 describes a spherical display and control device comprising a flexible transparent spherical surface sprung attached to a central hinged modular cube assembly that contains digital displays on outward faces, the device providing spherical rotation and physical displacement data for three dimensional control applications

From US 2005/140565 A1 it is know a mobile telephone having a wrap-around display on which information can be scrolled upon rotating or tilting the phone.

US 2006/129951 A1 discloses a method and a device for browsing information on a display of a hand-held device when a portion of virtual data objects displayed on the display device is moved in the same direction as the hand-held device is tilted.

From WO 98/14863 A it is known an image display device comprising a display, a sensor responsive to an angle of tilt of the device whereby information is scrolled upon lilting, the device.

Nevertheless, there is a demand to provide alternative solutions to the problem of presenting information on portable electronic devices, where a seam of the display risk disturbing the presentation of information.

### SUMMARY

The present invention is directed towards providing an alternative method and device for presenting information to a user.

According to an aspect of the present invention, there is provided an information presentation device for presentation of data information, the information presentation device comprising an information presentation unit arranged to present data information to a user, and a presentation controlling unit connected to the information presentation unit, said presentation controlling unit being arranged to control the presentation of the information on the information presentation unit in dependence of physical rotation around an axis of rotation of the information presentation device.

Said information presentation device may further comprise a user input unit for receiving user input, and wherein the presentation controlling unit further may be arranged to present a selection area related to the presented information, wherein either the data information or the selection area is presented in dependence of physical rotation around an axis of rotation of the information presentation device, in dependence of user input.

Said information presentation unit of said information presentation device may further have a first end and a second end, wherein the first and second ends are provided opposite to each other, and wherein the presentation controlling unit further is arranged to control the presentation of the information on the information presentation unit in dependence of the position of the first and the second opposing ends of the information presentation unit.

Said presentation controlling unit of said information presentation device may further be arranged to determine physical rotation around the axis of rotation of the information presentation device and arranged to position the selection area in dependence of the determined rotation.

Said presentation controlling unit of the information presentation device may further be arranged to determine physical rotation around the axis of rotation of the information presentation device and arranged to provide the presentation of information in dependence of the determined rotation.

Said presentation controlling unit of the information presentation device may further be arranged to shift out information from the information presentation unit, and to shift in information to be information presentation unit in dependence of the determined physical rotation of the information presentation device.

Said presentation controlling unit of the information presentation device may further arranged to determine the position on the information presentation unit at which information pieces are to be presented, in dependence of the detected physical rotation of the information presentation device and in dependence of the position of the first and the second opposing end of the at least one information presentation unit.

Said information presentation unit of the information presentation device may further comprise a substantially rotation symmetric shape around the axis of rotation, and where the information presentation unit covers at least substantially the entire turn around the envelope surface of the rotation symmetric shape.

Said information presentation unit of the information presentation device may further be arranged to present a site in relation to the presented information, where information may be shifted out from the information presentation unit and shifted in to the information presentation unit, in dependence of the rotation of the information presentation device.

The position of the presented site on the information presentation unit of the information presentation device can be changed in relation to the rotation of the information presentation device.

The information to be presented by an information presentation device may further comprise at least one content-rich information portion and at least one content-poor information portion.

The presentation controlling unit of the information presentation device may further be arranged to determine the position on the information presentation unit, at which position the at least one content-rich information portion of the information is to be presented, in dependence of the detected physical rotation of the information presentation device and in dependence of the position of the first and the second opposing end of the at least one information presentation unit.

The presentation controlling unit of the information presentation device may further be arranged to determine the position on the information presentation unit, at which position the at least one content-poor information portion of the information is to be presented, in dependence of the detected physical rotation of the information presentation device and in dependence of the position of the first and the second opposing end of the at least one information presentation unit.

The presentation controlling unit of the information presentation device may further be arranged to determine the position of the content-rich information portion and the position of the content-poor information portion, in order to present content-rich information portions on the information presentation unit and to position at least one content-poor information portion across the first and second ends of the information presentation unit, in dependence of the detected physical rotation of the information presentation device and in dependence of the position of the first and the second opposing end of the at least one information presentation unit.

Said one of the at least one information presentation units of the information presentation device may further have a substantially rotation symmetric shape around the axis of rotation, wherein the at least one information presentation unit covers at least substantially the entire turn around the envelope surface of the rotation symmetric shape, in which the first and second ends of the at least one information presentation unit defines the substantially entire turn.

The presentation controlling unit of the information presentation device may further be arranged to disclose a position on the information presentation unit in relation to the presented information, at which position the presentation controlling unit is arranged to start presenting information, and arranged to stop presenting presented information, in dependence of the rotation of the information presentation device.

The information presentation device may further comprise a mobile phone.

According to another aspect of the present invention, there is provided a method for controlling an information presentation unit adapted to present information, comprising obtaining information to be presented on an information presentation unit, presenting information on the information presentation unit, detecting a rotational motion around an axis of rotation of an information presentation device, and providing the presented information on the information presentation unit in dependence of the detected rotational motion, such that information can be shifted out from the information presentation unit and shifted in to the information presentation unit.

The method for controlling an information presentation unit that has a first and a second end, where said ends being directed opposite to each other, may further comprise the steps of monitoring a rotational motion around an axis of rotation of an information presentation device, monitoring the position of the first and second ends of the information presentation unit, and wherein the step of providing the presented information further may comprise providing presenting information on the information presentation unit in dependence of the monitored rotational motion and in dependence of the monitored position of the first and second ends, such that content-rich information is presented on the information presentation unit and that content-poor information is presented across the first and second ends of the information presentation unit.

The method for controlling an information presentation unit may further comprise the steps of presenting a selection area on the information presentation unit, determining mode for updating information on information presentation unit, in dependence of user input, and wherein the step of providing information further may comprise providing either the selected area at an updated position on the information presentation unit or the presented information at an updated position on the information presentation unit, in dependence of the detection of rotational motion and in dependence of obtained user input, enabling the selection area or the information to rotate according to detected rotational motion around an axis of rotation of the information presentation device.

It should be emphasized that the term "comprises/comprising" when being used in the specification is taken to specify the presence of the stated features, integers, steps or components but does not preclude the presence or addition of one or more other features, integers, steps or components or groups thereof

### BRIEF DESCRIPTION OF THE DRAWINGS

In order to explain the invention and the advantages and features thereof in more detail, embodiments will be described below, references being made to the accompanying drawings, in which
figures 1A, 1 Band 1C illustrate an information presentation device according to various embodiments of the present invention;
figure 2 illustrates a display controlling unit according to some embodiments of the present invention;
figure 3 illustrates an information presentation device according to some embodiments of the present invention;
figure 4 illustrates an upper, a middle and a lower panel, each presenting one view along an axis of rotation, A, and two views perpendicular to said axis or rotation, A, of an information presentation device, of which the left hand view shows the information presentation device from the left hand side and the right hand view shows the information presentation device from the right hand side;
figures 5A and 5B illustrate method steps of a flow chart according to at least some embodiments of the present invention; and
figures 6A-D illustrate four views along an axis or rotation of an information presentation device according to some embodiments of the present invention;
figures 7A and 7B illustrate method steps of a flowchart according to some embodiments of the present invention;
figures 8A and 8B illustrate two views along an axis of rotation of an information presentation device according to some embodiments of the present invention;
figure 9 illustrates method steps of a flow chart according to at least some embodiments of the present invention;
figure 10 schematically illustrates one general type of information presentable on an information presentation device; and
figures 11A-11G illustrate multiple views along an axis of rotation of an information presentation device according to some embodiments of the present invention.

### DETAILED DESCRIPTION

When presenting information of a display or a screen, especially when presenting information with portions of content-rich information and portions with content-poor information, such as list type information that may be in the form of text information, the information presentation device according to a number of embodiments of the present provides a valuable tool, as an alternative to the displays and screens known today.

With reference to the figures as presented above, a variety of embodiments of the present invention are now explained.

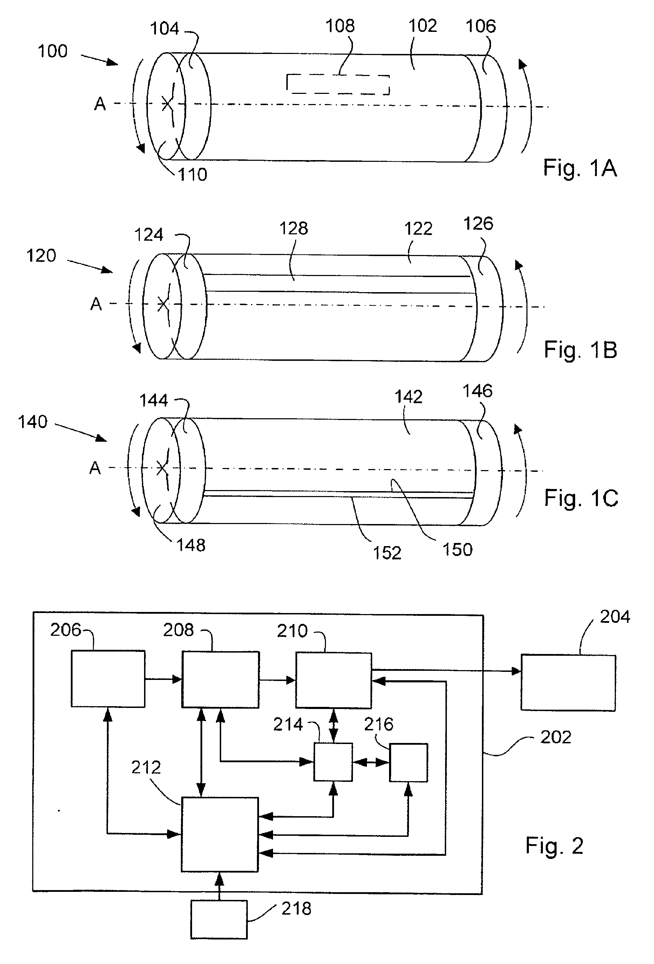

Figure 1A, 1B and 1C each illustrates an information presentation device 100, 120 and 140, respectively, according to some embodiments of the present invention. Each information presentation device also comprises an information presentation unit 102, 122 and 142. The information presentation unit may be a display or a screen.

In addition, a user input unit and a grip area, marked as 104, 124, 144 and 106, 126, 146, respectively, may also be comprised in the information presentation device 100, 120, 140.

The user input unit may be realized as a push key, as a slidable key or switch, as a wheel or in any other way.

The user input unit 104, 124, 144 may also function as a grip area, and the grip area 106, 126, 146 may alternatively also comprise a user input unit.

A cursor area 108 may also be provided on the information presentation unit, as indicated in figure 1A.

A selection area 128, can also be presented on the information presentation unit 122 of the information presentation device 120, as illustrated in figure 1B. The selection area 128 may also be regarded as a cursor area.

The information presentation device, if viewed along the axis of rotation, would be presented as 110 or 148.

The information presentation device as illustrated in figure 1A may be suitable for presenting list type information for which reason a rotation around an axis of rotation of the device is triggering an update of the information as presented on the display.

The information presentation device 120 or 140 as illustrated in figure 1B and 1C, respectively, may be suitable for presentation of content-rich and content-poor information portions, such as list type information. Content-rich information portion may be regarded as the list items, and the content-poor information portions may be regarded as space in-between said items.

Another example of content-rich and content-poor information portions, may be text lines with line spacing provided between the text lines.

However, other types of information may also be presented on the information presentation device 120, 140, such as continuous information such as pictures or videos.

According to some embodiments, the information presentation unit 102, 122 may cover the entire turn or at least substantially the entire turn of the information presentation device.

According to some embodiments the information presentation unit 142 covers substantially the entire turn of the information presentation device 140.

Rotation around an axis of rotation of the information presentation device 140 may trigger an update of the information as presented on the display, being an example of the information presentation unit 142.

For technical reasons it may be difficult to produce a display covering an entire turn, i.e. 100% of a turn, for which reason substantially the entire turn may be provided as an information presentation unit 102, 122, 142.

According to some preferred embodiments, the information presentation unit 102, 122, 142 being a part of the information presentation device 100, 120, 140 has an essentially cylindrical shape, which information presentation unit may be realised in the form of a display, and may cover substantially the entire turn and may therefore appear as to be endless when viewing the entire display.

Viewing the display from one side perpendicular to the axis of rotation, in case of a rotation symmetric information presentation device, information can be presented just as reading or viewing a list of information from a white paper sheet. However, since information has to be updated as the device is rotated new information may have to be imported to the displayed section of the list and old information may have to be exported from the displayed section of the list.

According to at least some embodiments of the present invention, an input and output longitudinal site may be defined and positioned parallel with the axis of rotation. The position of this site can be made to depend on rotation around the axis of rotation of the information presentation device 100, 120, 140.

List type data may be displayed on the information presentation unit. List type data comprises data that may be displayed as a list of items such as text, icons, figures, thumbnails, links, video clips, or the like.

The distance along the circumference of the information presentation unit, between two consecutive items in the list corresponds to the "line spacing" of the list, according to at least some examples of information presentation device.

If rotation equals to or exceeds an angle of one line spacing, the position of the input/output site may be updated, such that a new line will appear at one end of the displayed section of the list and one old line of the displayed section of the list can be shifted out of the displayed area.

According to some embodiments of the present invention it is provided an information presentation device for presentation of data information, the information presentation device comprising an information presentation unit arranged to present data information to a user, and a presentation controlling unit connected to the information presentation unit, said presentation controlling unit being arranged to control the presentation of the information on the information presentation unit in dependence of physical rotation around an axis of rotation of the information presentation device.

The presentation controlling unit within this information presentation device may further be arranged to determine physical rotation around the axis of rotation of the information presentation device and arranged to provide the presentation of information in dependence of the determined rotation.

With reference to figure 2 illustrating a display controlling device 202 connected to a display 204, some embodiments of a device for controlling the information that may be presented on the display are now presented.

Rotation around an axis of rotation may be detected by a rotation detection unit 206, which may be realised as a gravitation dependent unit that is arranged to detect rotation around an axis of rotation. In the case the information presentation device has an elongated shape the axis if typically the longitudinal axis.

An angle determining and evaluation unit 208 is provided downstream of the rotation detection unit 206. The angle determining and evaluation unit 208, which in short may be called the angle unit, may determine the angle of rotation around the axis of rotation and evaluate whether any accumulated angle exceeds an angle of rotation that corresponds to the line spacing of the information as displayed on the display, or not.

The angle unit 208 is further connected to a display driver unit 210, which further may have a direct connection to the display 204, as presented in figure 2.

A memory unit 214 may also be provided in the display controlling device 202 for providing data of the information to be displayed on the display. This memory unit 214 may be connected to the angle unit 208 and to the display controlling unit 210.

The display controlling unit 210 may be realized by a display driver unit or the like.

In addition, a control unit 212 may be provided to control the function of the rotation detection unit 206, the angle determining and evaluation unit 208, the display controlling unit 210 and the memory unit 214. Moreover, a transceiving unit 216 may also be provided and connected to the control unit 212 as well as to the memory unit 214.

According to at least some embodiments of the present invention, a user input unit 218 may also be connected to the control unit 212 of the display controlling device 202. This user input unit 218 may be used to activate a method for presenting list type information, such as a list of items or the like, on a display, and to be used to confirm that data positioned within the cursor area 108 or selection area 128 are to be selected for further activities. The user input unit may also be used to activate other display related functions.

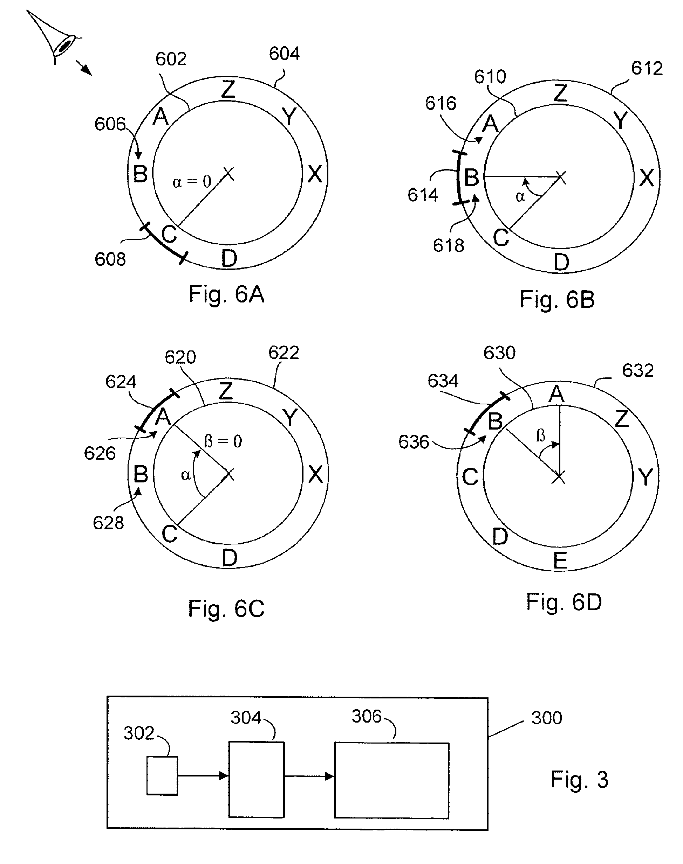

Figure 3 further illustrates an information presentation device 300 according to at least some embodiments of the present invention. The information presentation device 300, comprises a user input unit 302 connected to a display controlling unit 304, which further may be connected to an information presentation unit 306 such as a display or a screen. According to some embodiments, the information presentation unit 306 may cover the entire or substantially the entire envelope surface of the information presentation device 300, in the case of a rotation symmetrical shape of the information presentation device.

According to some embodiments the information presentation device 300 may be a mobile phone.

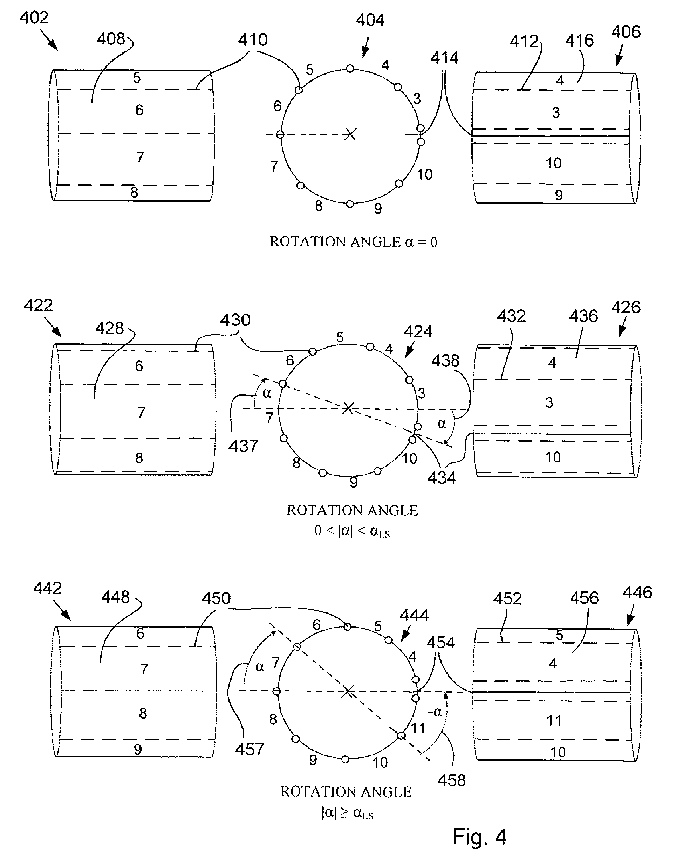

Figure 4 illustrate a cylindrical information presentation device presented in three panels; an upper panel, a middle panel and a lower panel, where each panel presents the cylindrical information presentation device at one specific rotation angle, α. The cylindrical information presentation device is thus presented at three different rotation angles. The upper panel illustrates views of the information presentation device at a rotation angle α = 0.

This figure is to visualize updating of information on the information presentation unit in dependence of rotation around an axis of rotation, according to some embodiments of the present invention.

To the left is displayed a view 402 perpendicular to the longitudinal axis from the left, and to the right there is displayed a view 406 perpendicular to the longitudinal axis from the right. The dotted lines of the left 410 and right 412 views indicate line breaks, i.e. the spacing between two consecutive lines. The numbering 3, 4, 5, 6, 7, 8, 9, and 10 denote line information as being representative to list type information, of which items, icons, and thumbnails are only examples of a large variety of items that can be displayed on the information presentation unit.

In the centre of the upper panel there is illustrated an information presentation device 404 viewed essentially along the longitudinal axis. Here the line breaks are indicated with circles 410 separating the consecutive lines from one another.

The site for input and output (I/O) of line information 414 on the display is indicated on the left hand side of the centre representation and thus also appears on the right hand side view of the information presentation device 406. It should be emphasized that this site is merely a line or a position at which the information as presented on the display may be shifted in and shifted out.

As the list type information is presented to be displayed from top and downwards on one side of the information presentation device that does not comprise the I/O site, the information as displayed near the I/O site is displayed upside down, as well as being discontinuous since the I/O site itself creates the context discontinuity.

The I/O site may not be clearly visible in case the information as displayed is presented such that the height of the display or screen, corresponds to an integer number of displayed item lines.

According to some embodiments of the present invention, the I/O site may be a position at which information can be shifted out of the display and shifted in to the display, rather than being a physical hardware display interruption.

Now, as the information presentation device is rotated by for instance a user holding the device in his or her hands and rolling the device to read or view further lines of list type items above or below the current view of the display, the rotation detection unit may detect rotation, which may start monitoring of the angle of rotation.

Rotation of the device enables a person to read or view the entire list material line by line. The updating of information may not be done by updating the whole displayed information. The only piece of information that may be necessary to update is the information presented around position of the I/O site. Since only two lines of list type data may have to be updated in order to move the I/O site one line spacing distance along the envelope surface, updating is quick. Moreover, the user will appreciate this by that the list type data will not jump on the display when reading or viewing the data when rolling or rotating the information presentation device. Instead the list type information appears to be fixed to the screen and therefore steady, which facilitates the reading by becoming less tiresome to a user's eyes when reading. This is in contrast to a conventional prior art screen, on which text jumps by one or more lines at a time when scrolling, which clearly becomes tiresome in the long run to a reader.

Now returning to figure 4 and the middle panel illustrating three views of an information presentation device at a non-zero rotation angle α. The rotation of the device is here smaller than the rotation angle corresponding to one line spacing. This angel is denoted α _{LS}.

As was described for the upper panel, to the left is displayed a view 422 perpendicular to the longitudinal axis viewed from the left, and to the right there is displayed a view 426 perpendicular to the longitudinal axis viewed from the right. Again the dotted lines on the left 430 and right 432 views indicate line breaks, which again are virtual line breaks between two consecutive lines. Thus the numbering 3, 4, 6, 7, 8, and 10 denote line information as being representative to list type information.

In the centre of the middle panel there is illustrated the information presentation device viewed nearly along the longitudinal axis. Here the line breaks are indicated with circles 430 separating the consecutive lines from one another.

In the centre display the angle α is clearly illustrated and shows how the whole information presentation device is rotated an angle α. The line spacing breaks as well as the lines themselves are thus also rotated an angle α along the envelope surface of the display of the information presentation device.

In the view 422 on the left hand side, it can therefore be seen that the lines 6, 7 and 8 have been rotated with respect to the position of the lines 6, 7 and 8 as displayed in the upper panel on the left hand side as shown in view 402.

Similarly, it can be seen the line breaks and the lines 3, 4 and 10 as displayed in the middle panel on the right hand side as shown in view 426 have been rotated with respect of the position as displayed in the upper panel of figure 4 on the right hand side view 406.

It is clearly visualised that the I/O site 434 of the display 436 is rotated along with the display a rotation angel α around the longitudinal axis. The I/O site is thus no longer centred on the right hand side view 426 of the middle panel.

The right hand side view 426 shows that for a rotation angle α that is smaller than a rotation angle that corresponds to a line spacing of the list type information, α_{LS} as presented on the display, the position of the I/O site is rotated along with the entire display and no updating of information on the display is performed.

Now, focusing on the lower panel of the three panels displaying an information presentation device at three different views, the information presentation device has been rotated an angle α that at least corresponds to the line spacing angle α_{LS}.

The left 442, right 446 and centre 444 views refer to different views of the information presentation device as explained above for the middle and upper panels.

In the centre view 444 is shown that the rotation angle α corresponds to the line spacing rotation angle α_{LS}, as the line spacing mark between lines 7 and 8 in view 442 has taken the position of the line spacing mark between lines 6 and 7, as shown in the upper panel, left hand side view 402.

The left hand side view 442 of the information presentation device in the lower panel thus presents further rotated lines, showing information on lines 6, 7, 8 and 9. The position of each of these lines therefore corresponds to the position of the lines 5, 6, 7, and 8 in the upper panel, left hand side view 402.

On the right hand side view 446, the position of the I/O site is now discussed. As the rotation angle of the information presentation device α, corresponds to the line spacing angle α _{LS}, a new line, line 11, of information is shifted in to the displayed area at the bottom of the displayed area. In addition, the first displayed line, line 3, is shifted out of the displayed area, bringing line 4 as the new first line of the displayed area. Together with the new line, line 11 being shifted in, the effect is that the I/O site is rotated an angle α in a direction opposite to an increasing angle α along the envelope surface. The angle of rotation of the I/O site in view 444 is therefore minus α, since α may either be a positive angle or a negative angle.

As the position of the input/output (I/O) site is rotated in a direction opposite to increasing angle α, the position on the display of the I/O site may be maintained in the centre of the display.

It should be clarified that the function of rotation of the I/O site may be switched off and again switched on. In a switched off mode, the position of the I/O site is not shifted and the information of the display may not be updated.

As the position of the I/O site is not rotated in the switched off mode, the I/O site can easily be rotated to the side of the display, being one example of the user presentation unit, that is directed away from the user holding the device, before switching on the information presentation device for updating of the display of said information presentation device.

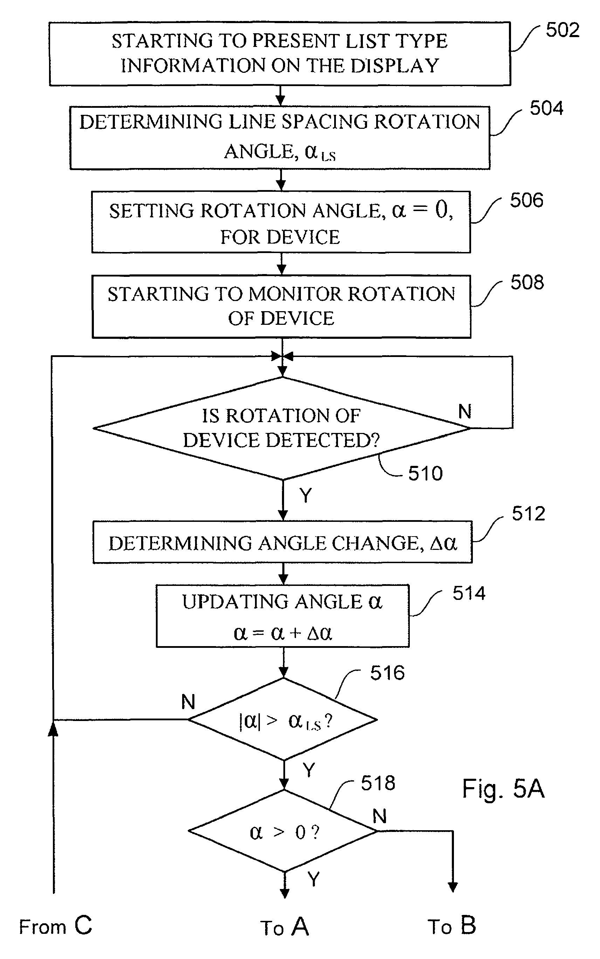

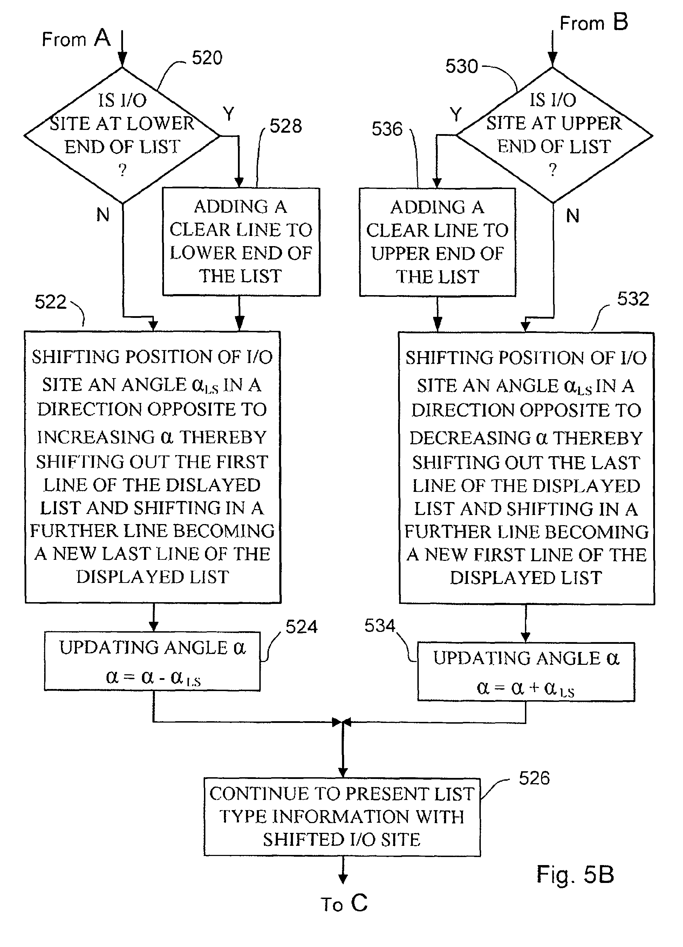

Figures 5A and 5B illustrate a method for updating of the position of the I/O site, which is described in more detail below.

According to at least some embodiments this method may start with step 502, starting to present list type information on an information presentation unit 102, 122, 142. Here, the information presentation unit 102 may comprise a display.

When presenting list type information, the rotation angle that corresponds to a line spacing distance along the envelop surface, α_{LS} of the information presentation device is now determined in step 504. This angle α_{LS} is thus the rotation angle that the rotation of one line around the longitudinal axis corresponds.

In the case the list type information comprises text type information, and is displayed with a small font size, the angle α_{LS} is becomes relatively small, whereas in the case the font size is large, the angle α_{LS} becomes relatively large.

The following step may the step 506 of setting the rotation angle α = 0, i.e. zero, for the information presentation device. The angle α is reset to zero in order to start from a well-defined angle value.

Monitoring of the rotation of the information presentation device may started by step 508. For this step and the following steps as illustrated in figures 5A and 5B, rotation of the device is thus monitored and updating of the information of the display may be performed in dependence of the rotation of the information presentation device around an axis of rotation.

Rotation of the device is detected in the step 510, "Is rotation of device detected?" In the case rotation is detected, the angle change, Δα, that is caused by the rotation is then determined. This is performed in step 512.

In case no angle rotation is detected in step 510, it is again determined in the following step whether a rotation is detected in the very same step, step 510, as shown in figure 5A.

If, however, a rotation actually is detected in step 510 and the rotation angle change determined in step 512, the angle alpha is updated at step 514, α = α + Δα.

Having updated the angle α, it is determined whether the updated rotation angle corresponds to the distance of a line spacing along the envelope surface of the device, and angle α _{LS}. This is performed in step 516 where it is determined whether the absolute value of the angle α is larger than the line spacing angle α _{LS}.

Since the information presentation device may be rotated around an axis of rotation in two directions, one being clockwise and the other being counter clockwise around an axis of rotation, it would not be enough to determine whether the information presentation device is rotated an angle that larger than the line spacing angle.

The information presentation device may equally well be rotated in the opposite direction such that the rotation angle α_{LS} becomes smaller than a negative line separation angle.

If the absolute value of the rotation angle α is not larger than the line spacing angle α_{LS}, the next step in the method is then detecting whether rotation of the device is detected in step 510.

In the case where the rotation angle is positive and larger than the line spacing angle α _{LS}, that is answering Y in step 518, the following step in the method is step 520, as illustrated in figure 5B, determining whether the I/O site is positioned at the lower end of entire list, or not.

A positive rotation angle change of the information presentation device is defined as the direction is which the device is rotated when reading from top and downwards of the list type information. Likewise, a negative rotation angle change is defined as the direction in which the device is rotated when reading the information from bottom and upwards.

As explained above, the I/O site is typically a site at which presented information may be shifted out and information to be presented may be shifted in.

The list type information to be displayed in the display, may commence with the top line of the entire list file. This top line equals to the upper end of the list. A corresponding bottom line of the entire list is thus the lower end of the list.

In step 520 it is determined whether the I/O site is positioned at the lower end of the entire list, or not. If the I/O site is not positioned at the lower end of the entire list, meaning that there is additional information to be switched in, the following step is the step at which the position of the I/O site is changed.

According to at least some embodiments, step 522 comprises shifting the position of the I/O site an angle α_{LS} in a direction towards decreasing α angle value. By shifting this I/O site the first line of the displayed list is shifted out. Also, a further line is shifted in becoming a new last line of the displayed list.

Returning to the information presentation device as displayed at three different rotation angles, it is illustrated when comparing the upper panel and the lower panel, that the first line, being line 3, of displayed list of the right hand side view 406 of the upper panel, is switched out and line 11 is shifted in to the displayed area, as illustrated in the lower panel in the right hand side view 446 of figure 4.

Having shifted the I/O site position, the angle α is updated in step 524, performing α = α - α_{LS}. After the alpha α is updated the next step to execute may be step 526, continuing to present list type information, but now with a shifted I/O site position.

Subsequent to presenting the information on the display with an updated I/O site position, step 510 is performed by determining whether rotation of the device is detected or not.

Returning to figure 5B and the case in which the I/O site is positioned at the lower end of the list, there is no additional information to be switched in to the displayed. When the question in step 520 is answered by a "Y", the following step may therefore be step 528 of adding a clear line to the lower end of the list. The list of items is thus prolonged with one clear line or item from below. This is performed in order to avoid presenting the I/O site to the user rotating the information presentation device in step 526, as repetitive shifting of information else could risk displaying the I/O site to the user.

It should be clarified that the clear line is added to the lower end of the list itself, rather than to the information as presented on the information presentation device. The clear line is therefore displayed in the displayed area, after shifting of the I/O site has been performed.

In the case the information presentation device is rotated, by for instance a user, in the direction for which the angle α is negative, that is when rolling or rotating the device around an axis of rotation from the bottom of the display area to the top of the display area, the angle change is negative and the accumulated angle α may become negative in step 518.

Following the alternative B to figure 5B, the next step to the performed is determining whether the I/O site is positioned at the upper end of the entire list, in step 530.

In case the I/O site is already positioned at the upper end of the list, as determined in step 530, the following step is adding a clear line to the upper end of the list, in step 536. As described in connection to step 528, the clear line as added to the list itself. The clear line is then shifted into the displayed area in step 532, when the information is updated around the I/O site, in the way as earlier described.

However, if it is determined that the I/O site is not positioned at the upper end of the entire list, the following step is step 532 at which shifting of the I/O site is performed. In this step, shifting is performed in a direction opposite to the direction as described in step 522. In step 532 the I/O site is shifted an angle α_{LS} in a direction opposite to the direction of decreasing angle α. The absolute value of the angle α is thus decreased. The last line on the display is thus shifted out. In addition, shifting in of a further line that is becoming a new first line on the display is hence also performed, in step 532.

Having performed the shifting of the I/O position, the angle α is updated in step 534 by updating the angle α by setting α = α + α_{LS}.

After the alpha α is updated the following step is to continue presenting the list type information with the shifted I/O site in step 526, as illustrated in figure 5B. As explained above, subsequent to step 526 it is again determined whether rotation of the device is detected, or not in step 510, as illustrated in figure 5A.

According to an alternative embodiment of the present invention, the position of the I/O site may be shifted when the absolute value of the angle of rotation is larger than a part of a full turn, for instance a quarter of a turn.

Moreover, it is realized that the information presentation device can be turned and rotated in any direction, for which reason list displayed close to the I/O site may be turned around to be displayed from top and downwards. The opposite side of the information presentation device, which now does not comprise the I/O site, is then displayed upside down, as only one side at a time may be displayed from top and downwards.

The I/O site may be shifted whenever the absolute value of the rotation angle alpha exceeds alpha LS. In the case of the I/O, the alpha LS may be the angle corresponding to a singular pixel distance around the circumference of the information presentation device. In the case of the I/O the alpha LS may alternatively related to the distance between two consecutive items displayed on the information presentation unit.

According to some embodiments of the present invention, it is thus be provided a method for controlling an information presentation unit adapted to present information, comprising the steps of obtaining information to be presented on an information presentation unit, presenting information on the information presentation unit, detecting a rotational motion around an axis of rotation of an information presentation device, and providing the presented information on the information presentation unit in dependence of the detected rotational motion, such that information can be shifted out from the information presentation unit and shifted in to the information presentation unit.

In addition, the information presentation device function as described herein may be inactivated or switched off as indicated above, possibly for presentation of material different from list type material on the display. In a switched off mode, updating of the screen will thus not be performed, as the device will not respond to rotation around any axes.

It should be pointed out that the addition of a clear line, as mentioned above, is merely one example of presenting almost anything to a user. A clear line may be understood as an empty line. The addition of several clear lines may in reality be the addition of a long empty space.

According to the intended use of the information presentation device, the I/O site remains positioned on the side directed away from the user such that the user cannot see the I/O, upon rotation of the device.

However, in case the I/O site is visible on the information presentation device, it can for instance be turned vertically such that displayed information can be shown without the presenting the I/O site on the viewed side.

The information as presented on the information presentation unit may be updated on a more continuous basis, as compared to what has been described above. The line spacing distance may be defined as the distance between two consecutive pixels along the circumference or the envelope surface of information presentation device. By shifting information in and out at the I/O site per line of pixels, a "smooth scroll" experience may be provided to a person towards whom the I/O-side of the information presentation device is directed.

It is clear from the above that rotation of the information presentation device is central to the updating of information or rather position of information on an information presentation unit, such as a display or a screen of an information presentation device.

In figures 6A to 6D there are illustrated four views of an information presentation device along an axis of rotation, according to some embodiments of the present invention.

Reference will be made to these figures in the description below, where it will be described the usage of rotation motion to update the presentation of information as presented on the display. Two modes of updating of presentations have here been defined. Further modes of updating of information may however easily be anticipated, wherein the rotational motion may be used to update the presentation in various ways.

In figure 6A it is thus illustrated a side view of an information presentation device along an axis of rotation. The information presentation device typically comprises an information presentation unit, as described above. In figure 6A, an information presentation unit is depicted by 602, whereas the information to be presented on the display is denoted by 604.

Information to be presented on such a display may comprise content-rich information portions and content-poor information portions, which may be provided in the information in an alternating fashion, after one another. One example of content-rich information is the text line B, as denoted by 606.

At another content-rich information portion position it is presented a selection area denoted with 608. This selection area may be an area, which may be used for selection of options prior to activation of a selected option, for instance. As will be described below the functions that are possible to activate may be dependent on user input as obtained from a user input unit, and provided by a user of the information presentation device.

A user input unit may hence be used to confirm that data positioned within a cursor or selection area, for instance, are to be selected for further activities. Of course, other display related functions might also be controlled by using input from the user input.

As will be described below the position of the cursor area on the information presentation unit, may also be dependent on the rotation of the information presentation device, according to at least some embodiments of the present invention.

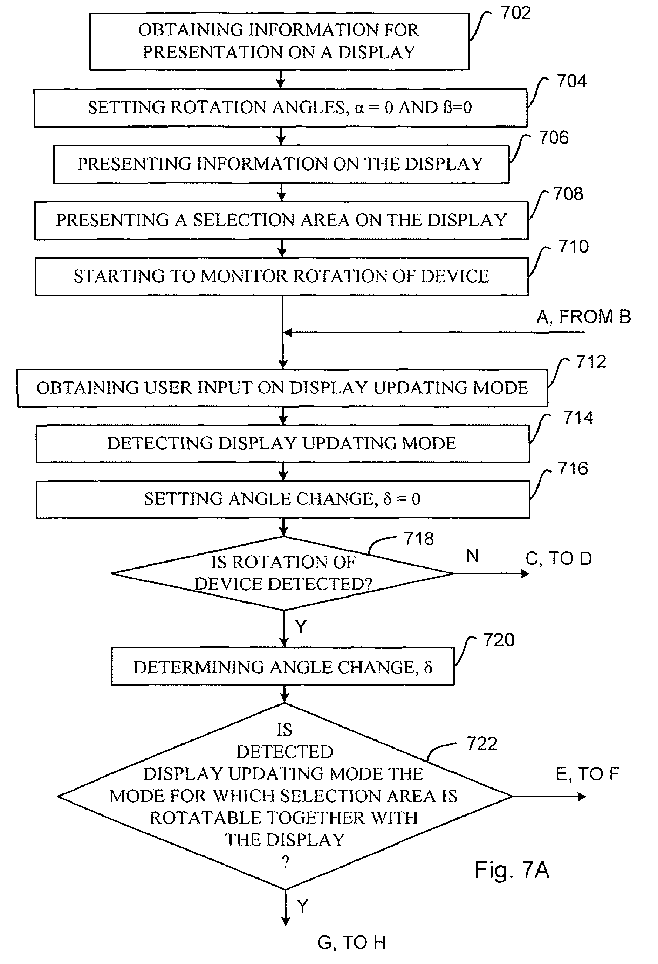

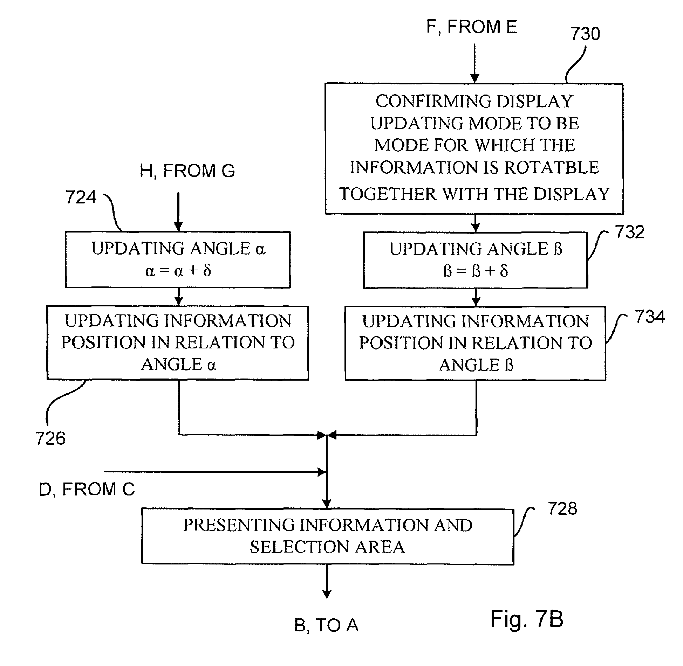

While describing the various views of the information presentation device as illustrated in figures 6A-D, reference is also made to figures 7A and 7B illustrating a flow-chart with method steps of updating the presentation of information on a information presentation device.

The method may start with step 702 of obtaining information to be presented on a display, as one example of an information presentation unit, of an information presentation device.

Initially rotation angles that are used in two different updating modes, are set to zero (=0) in the step of 704. Other values may be used in an alternative embodiment.

The following step is the step of presenting information on the display, which may the surface as denoted by 602 in figure 6A. The information in general is thus denoted by 604, and one content-rich information portion by 606, comprising "B".

Information may thus be presented on the display 602.

Next step is the step of presenting a selection area on the display, step 708. In figure 6A this selection area is denoted by 608, which here happen to cover the information portion "C".

It can be pointed out that figure 1B presents an information presentation device 120 with a information presentation unit 122 having a selection area 128.

The method for updating the presentation now comprises, step 710, starting to monitor rotation of the device. This is performed in order to enable updating of the display in dependence of a rotation around a rotation axis as performed by a user of the information presentation device.

The next step is obtaining user input on display updating mode in step 712. In this step, the device may obtain a user selection of a user input unit, for instance obtaining whether a switch is positioned in a first or a second position. A multiple of different positions may however be realized, according to alternative embodiments.

Having obtained input from a user on the display updating mode, it is next detected the actual mode in step 714, detecting display updating mode.

In a following step, the angle change δ is set to zero (0). This is performed in order to facilitate updating angle α or β in small incremental steps.

In step 718, it is determined whether rotation of the information presentation is detected, or not. If it is determined that the device is rotated, the rotation angle change δ is determined, in step 720.

As the actual display updating mode was detected in step 714, it can now be determined in step 722 whether the detected display updating mode is the mode for which the selection area is rotatable together with the display, or not. It is thus determined whether the selection area is to follow a rotation of the device or not.

If the interrogation can be answered by a "Y" in step 722, the proceeding step is step 724, which is presented in figure 7B, updating angle α by performing α = α + δ. The angle α, which may define the position of the selection area, is thus updated.

The following step is then the step of updating the information position in relation to angle α, including the selection area, in step 726.

Having updated the information position in step 724, the information can be presented on the information presentation unit, such as the display, in step 728, presenting information and selection area.

One example of such a presentation is illustrated in figure 6B in which information 612 is presented on an envelope surface of an information presentation unit, such as a display or a screen, 610.

As can clearly be seen, the position of the selection area is changed in relation to the illustration in figure 6A. The angle α is updated from the value (=0) in figure 6A, for which reason the angle can be visualized by the angular distance between the content-rich information portions "C" and "B", in this example.

The position of the selection area has thus changed. The selection area is now positioned at the same horizontal height as the rotation axis, which is different from the position of the selection area in figure 6A, which was clearly below the one for the rotation axis and oriented downward. Since users typically view items at an angle downward, providing a selection area oriented downward may not be preferred. For this reason an updating of the position around the envelope surface of the selection area is provided. As illustrated in figure 6B, the position of the selection area is now updated.

It should be clarified that updating of the selection area is performed by rotating the information presentation device. In the display updating mode for which the selection area is rotatable together with the display, being one example of the information presentation unit, the selection area is updated. The information content as presented by the information presentation unit, as illustrated in figure 6B, is in this example however not updated in relation to, for instance the horizontal height as compared to the rotation axis.

It should be kept in mind that an updating of information position may be performed in a different way, according to an alternative embodiment. According to this alternative embodiment, the information as presented on the display may be rotated in a direction counter to the rotation direction of the information presentation device. Thus, when rotating the device an angle α, the information as presented on the display may be rotated an angle - α, in relation to the display. Irrespective of the size of the rotation of the device, the impression of the display when viewing it would be that the information is remained at its position. The real display has of course been rotated and in this example also the selection area, in order to change the position of it in relation to the information as presented on the display.

Returning to the method of updating information, having presented the information and the selection area in step 728, the next step for a continuous process is the step of obtaining user input on display updating mode, step 712. As earlier indicated this step may be to check in which position a user input device is set, to mention one possible example.

The following two steps are thus steps 714 and 716, detecting display updating mode and the step of setting angle change to 0, respectively, as described above.

If rotation of the information presentation device is not detected in step 718, the next step 728 to continue to present information and the selection area, as presented in beforehand.

If however rotation is detected in step 718, the angle change determined in step 720 and the display updating mode is the mode in which it is determined that the selection area is rotatable together with the display in step 722, the following steps are steps 724 and 726, which are ended by step 728, presenting information and selection area.

One example of such a presentation is illustrated in figure 6C, in which the selection area 624 is updated to cover the content-rich information portion 626 of the information 622 as presented on the information presentation unit 620.

The position of the selection area is thus updated by updating the angle α in step 724, thus providing the selection area at a position on the display where it is more easily viewable by a user.

Presenting the information and the selection area in step 728, the steps to proceed are steps 712, 714 and 716, until it is detected in step 718 that the device is rotated. The angle change δ is determined in step 720.
In step 722, it may however be determined the detected display updating mode is not the mode in which the selection area is rotatable together with the display upon rotation.

For this reason, it can be confirm the proceeding step that the display updating mode is the mode in which the information is rotatable together with the display, in step 730.

In this mode the presented information that may comprise content-rich and content-poor information portions, is rotated along with a physical rotation of the information presentation device. The impression of such a rotation is that the information seems to be fixed on the display. As can be clearly understood, this is firstly mere an impression, and secondly this is one mode of presenting information, out of at least one more mode, which was described above in relation to figures 6A and 6B.

Having confirmed the display updating mode in step 730, the step of updating the angle β in step 732 is performed by setting β = β + δ, where δ is the angle change as determined in the prior step 720.

It should be mentioned that step 730 of confirming the display updating mode maybe regarded to be step for clarifying the illustration of the flow-chart only and may in reality not be performed in case the number of possible modes to update information as presented on the display is limited to two.

With an updated angle β as determined in step 732, the step of updating the information position in relation to angle β is now performed in step 734.

It can be noted that an updating of step 734 may also be performed in relation to angle α, just as the step of updating information position in step 726 may also be performed in relation to angle β.

Having performed the step of updating the information position, the step of presenting information and selection area may be performed in step 728.

One example of such a presentation is schematically illustrated in figure 6D, in which an information presentation device is presented along a rotation axis.

The cylindrical or essentially cylindrical envelope surface of the information presentation unit is denoted by 630 and the information that may comprise content-rich information portions and content-poor information portions is denoted 632.

It is seen that the information as displayed on the information presentation unit is now positioned at a new position in relation to the horizontal height of the rotation axis. The content-rich information portion "A" is now presented topmost of the display.

The position of the selection area is however not updated in the sense that the selection area is positioned at about the same position as the selection area of figure 6C.

Upon detecting a display updating mode for which the presented information is to be rotated together with the device, the information will follow the rotation of the device, just as if the information was fixed on the screen.

It should again be mentioned, that updating of presented information might be performed according to alternative embodiments. According at least one of these alternative embodiments, the selection area as presented on the display may be rotated in a direction counter to the rotation direction of the information presentation device. Thus, when rotating the device an angle β, the selection area as presented on the display may be rotated an angle - β, in relation to the display. Irrespective of the size of the rotation of the device, the impression of the display when viewing it would be that the selection area is remained at its position relative to the exterior to the device. The real display has of course been rotated and in this example also the information, in order to change the position of it in relation to the information as presented on the display.

It may be added that the selection area may initially be positioned at a position of the information presentation device, which is diametrically opposite to an input/output site that was earlier described in some detail.

On real displays the position of the selection area may be updated when the distance correspondence of the rotation angle α exceeds the distance between two consecutive pixels along the circumference of the information presentation device.

According to some embodiments of the present invention it is thus provided a method for controlling an information presentation unit adapted to present data information, comprising the steps of obtaining information to be presented on an information presentation unit, presenting information on the information presentation unit, presenting a selection area on the information presentation unit, determining mode for updating information on information presentation unit, in dependence of user input, detecting a rotational motion around an axis of rotation of an information presentation device, and providing either the selected area at an updated position on the information presentation unit or the presented information at an updated position on the information presentation unit, in dependence of the detection of rotational motion and in dependence of obtained user input, enabling the selection area or the information to rotate according to detected rotational motion around an axis of rotation of the information presentation device.

Having presented a method for controlling presentation of information by referring to the steps of figure 7, an information presentation device for presentation of information at least according to some embodiments will now be described.

An information presentation device according to some embodiments of the present invention comprises an information presentation unit, a user input unit and a presentation controlling unit for controlling of the presentation of information onto the information presentation unit.

It should be pointed out that the display controlling device 202 as depicted in figure 2, may be adapted to perform the method steps of the flow-chart as presented in figure 7. For this reason reference is made to figure 2.

The step of obtaining information for presentation on a display, step 702, may be performed by the transceiving unit 216. The step of setting the rotation angles α and β to zero, step 704, may be performed by the angle determining and evaluation unit 208. The steps of presenting information on the display, step 706, and the step of presenting a selection area on the display, step 708, may be performed by the display controlling unit 210, which may be a display driver unit, in connection with the display 204.

The step of starting to monitor rotation of device, step 710, may be performed by the rotation detection unit 206 in connection with the control unit 212. Obtaining user input on display updating mode, may be performed from the user input unit 218 under the control of the control unit 212.

The display controlling unit 210 may detect the display updating mode in step 714, whereas the angle determining and evaluation unit 208 may perform setting angle change δ = 0, in step 716.

Step 718, determining whether rotation is detected or not may be performed by the rotation detection unit 206, and step 720, determining angle change δ may be executed by the angle determining and evaluation unit 208.

Since the display controlling unit 210 might have performed step 714, it may also perform step 722, determining whether the detected display updating mode is the mode for which the selection area is rotatable together with the display, or not.

The step of confirming the display updating mode to be the mode for which the information is rotatable together with the display, step 730, if desired, may also be performed by the display controlling unit 210.

The steps of updating the angle α and angle β, in steps 724 and 732, respectively, may be performed by the angle determining and evaluation angle 208.

It can be noted that the angle determining and evaluation angle 208 may alternatively be called the angle unit 208.

The steps of updating information position in relation to angle α and angle β, as performed in steps 726 and 734, respectively, may be performed by the display controlling unit under the control of the control unit 212.

Moreover, the step of presenting information and selection area on the display, step 728, can be executed by the display controlling unit, 210 in connection with the display unit 204.

A few of these cited steps may however be performed by a unit different from the one described. The control unit my for instance have alternative tasks to perform. As the presentation controlling unit thus can be adapted to perform another method, additional control functions may be provided by the control unit according to at least some embodiments of the present invention.

According to some embodiments of the present invention it is thus provided an information presentation device for presentation of data information, the information presentation device comprising an information presentation unit arranged to present data information to a user, a user input unit for receiving user input, and a presentation controlling unit connected to the information presentation unit, said presentation controlling unit being arranged to control the presentation of the information on the information presentation unit, and arranged to present a selection area related to the presented information, wherein either the data information or the selection area is presented in dependence of physical rotation around an axis of rotation of the information presentation device, in dependence of user input.

According to some embodiments of the present invention, the presentation of information may be dependent of the display updating mode in a way such that when the mode is the one for which the selection area is rotatable together with the display, then the information presentation unit may present empty space as information. In other the information presentation unit will present the selection area only and no real information. When the display updating mode is changed to the mode for which the information is rotatable together with the display, then the information will be presented as well, in addition to the selection area.

With the provision of an information presentation unit that covers substantially an entire turn of a cylindrical information presentation device, the part that is not covered by the information presentation unit may be focussed upon.

For the presentation of information on the information presentation unit, situations in which content-rich information portions such as text lines virtually are interfered by the part that is not covered by the information presentation unit, are to be avoided in order to provide a proper information presentation.

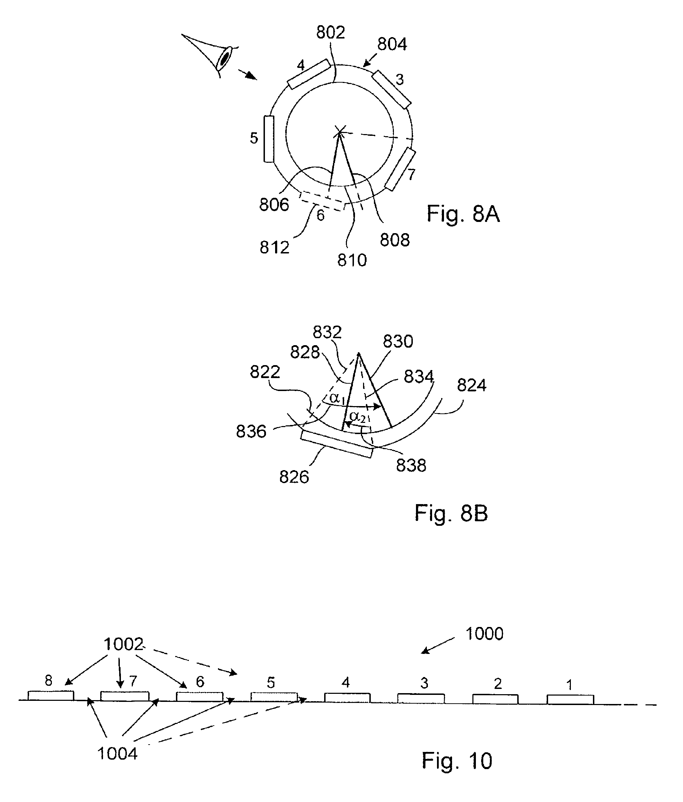

A possible overlap situation for the information to be presented and the information presentation unit, where the information presentation unit is shown along an axis of rotation, is presented in figure 8A. The envelope surface of the information presentation unit is depicted as 802, and the information to be presented on it as 804. The part that is not covered by the information presentation unit is defined as the first and second opposing ends of the information presentation unit, and are presented as 806 and 808, respectively. The part that is not covered by the information presentation unit may be regarded as a seam of the information presentation unit, and defined between the first and second opposing ends, and therefore depicted as 810 in figure 8A. As the seam may be regarded as a discontinuity of the information presentation unit, nothing can be actively presented in this region.

It can be pointed out that figure 1C presents an information presentation device 140 with a information presentation unit 142 having first 150 and second 152 opposing ends.

In figure 8A it is also shown a content-rich information portion to be presented. One such portion is denoted as 812. It is thus clearly illustrated that this portion of content-rich information cannot be displayed with the presented relative orientation of the information and the information presentation device. Figure 8A is thus an illustration of a situation in which information may have to be shifted along the envelope surface such as to enable content-rich information to be presented on the information presentation unit while avoiding interference by the seam with the presented information.

Figure 8B illustrates an enlarged portion of the figure 8A, in which the envelope surface is depicted as 822. The information to be presented is denoted as 824. The seam of the information presentation unit is defined by the region between the first end 828 and the second end 830. The content-rich information portion of the information to be presented on the information presentation unit, such as the display, is denoted by 826. As illustrated in figure 8B, the content-rich information portion has a first end 832 and a second ends 834.

Similar to the illustration of figure 8A, it is clear from figure 8B that the content-rich information portion overlap the seam information presentation unit. To resolve the overlap, shifting of information may have to be performed in order to avoid interference from the display seam with the presented information portion.

Shifting of information along an envelope surface can be performed in either the clockwise or the counter clockwise direction for a cylindrical information presentation device. Two possible ways to resolve the overlap of the display seam and the information thus exist.

For a counter clockwise shifting the information may have to be shifted beyond the display seam, i.e. an angle α₁, as defined as the angle between the first end of the content-rich portion 832 and the further end of the seam end further away, 830. For a shifting in the clockwise direction beyond the display seam, the shift angle α₂, may be defined as the angle between the second end 834 of the content-rich information portion 826 and the other seam end 828.

In figure 8B the illustrated angel α₂ is smaller than the angle α₁, for which reason a smaller shift would have to be performed when shifting the information in the clockwise direction an angle α₂, as compared to shifting in a counter clockwise direction an angle α₁.

Shifting the information to be presented an angle α₂ along the envelope surface thus resolves the overlap of the seam and the content-rich information portion. This is achieved by providing a content-poor information portion over the display seam. By providing a content-poor information portion, such as a line spacing over the seam, interference from the seam with the information-rich portion is avoided.

The visual impression of the effect of such a shifting of information to be presented is that information is presented on the display as if the seam had not existed. The seam may in this respect be regarded as invisible in relation to the information to be presented.

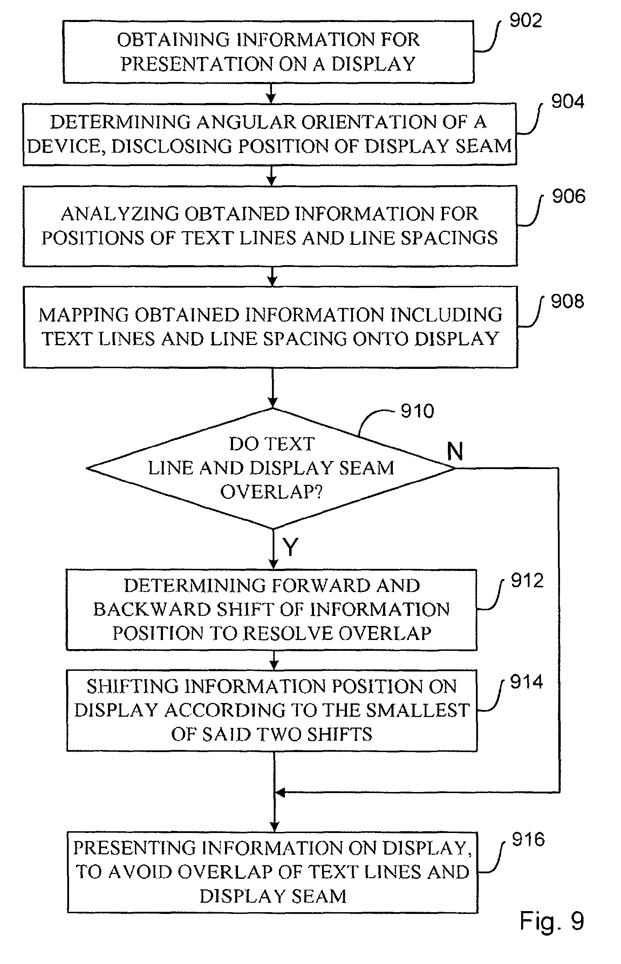

A method for the shifting of information along the envelope surface is presented by method steps as illustrated in the figure 9. This method may start with step 902, obtaining information for presentation on a display. The display is thus one example of an information presentation unit, which preferably has a cylindrical shape and forms substantially a full turn, with the seam located within and as defined by two opposing ends of the information presentation unit.

The next step of the method may be step 904, determining the angular orientation of the information presentation device, around the axis of rotation. For the reason that the information presentation unit is arranged fixed on the information presentation device, any orientation of the device reveals the orientation of the information presentation unit as well.

Knowing the angular orientation of the information presentation unit discloses the angular position of the seam of the information presentation unit. The position of the seam around the envelope surface of the device is sought in order to enable provision of information on the information presentation unit avoiding interference by the display seam with the presented information.

The next step may be the step of analyzing obtained information for positions of text lines and line spacing, step 906. Text lines and line spacings are typical examples of content-rich and content-poor information portions, respectively.

The subsequent step is the step of mapping obtained information including text lines and line spacings onto the display, step 908. In this step information may not be presented on the display but may rather be mapped virtually onto the display to enable proper presentation of information.

The following step is the step of determining whether a text line overlaps with the display seam, or not, step 910.

It can be mentioned that information to be presented may be provided to the information presentation unit by a information controlling unit such as a driver. This information can be input to the display at the I/O site, as described above. The information to be presented may thus be incorporated onto the display at this site.

It may also be mentioned that the presentation of information digitally on an information presentation unit, comprises providing information for the entire information presentation unit at the same time, in practise. This is in contrast to an analogue presentation where lines are presented in a sequential manner.

The seam of the information presentation unit inherently follows any rotational motion of the information presentation device, whereas the I/O site may not. For this reason, the relative angular position of the seam of the information presentation unit may not be known per definition in relation to the I/O site.

If it is determined in step 910 that there is a overlap of a text line and the seam of the information presentation unit, such as a display, in step 910, the subsequent step may be step 912 of determining forward and backward shift of information position to resolve the overlap.

In figure 6B there are illustrated two directions to shift information to be presented in order to resolve the overlap of the seam and the information. Either a forward or a backward shifting of the information to be presented may be performed. The forward shifting may be defined as shifting the information in a direction such as a further content-rich information portion can be displayed. The backward shifting may be defined as shifting the information in a direction such as the display seam that was to interfere with the content-rich information portion will not interfere upon subsequent presenting on the information on the display. This may be achieved by shifting the information back such that the content-rich information portion falls outside the displaying area of the information presentation unit and the seam overlaps a content-poor information portion. The visible effect of such a shift is thus that the displayed seam does not interfere with the presented information.

After the step of determining forward and backward shift of information required to resolve the overlap in step 912, the step 914 of shifting information position on the display according to the smallest of said two shifts, may follow. In this step, the smallest of the two shifts can be chosen to minimize the step of shifting the information.

Choosing the larger shift for shifting the information may of course alternatively be performed.

It should be mentioned that information presentation device may even increase or decrease the line spacing in size of text information such that an integer number of content-rich information portions can be presented to the information presentation unit, and that at least one seam is covered by line spacings of the text information. In this way, the seam will remain being positioned at a content-poor information portion, without the need to determine whether the is an overlap of a seam and content-rich information portions at every occurrence of a information being over a seam.

Having shifted the information, the step of 916 may be performed, i.e. presenting information on the display, in order to avoid overlap of text line and display seam.

It should be clarified that the information is typically not visibly displayed prior to determining whether there is an overlap or not.

The process of shifting may therefore be difficult to detect by the human eye.

If it is determined in step 910 that the text line and the display seam do not overlap, the following step is step 916 of presenting information onto the display to avoid overlap of text lines and display seam.

As a smaller shifting may preferred to a larger shifting, the smaller shift can be used for shifting of the information, in order to resolve overlap of text line and display seam, being examples of content-rich and content-poor information portions, respectively

According to at least some embodiments of the present invention, it is provided a method for controlling presentation of information on at least one an information presentation unit having a first and a second end, where said ends being directed opposite to each other, comprising the steps of obtaining information for presentation on an information presentation unit, monitoring a rotational motion around an axis of rotation of an information presentation device, monitoring the position of the first and second ends of the information presentation unit, and presenting information on the information presentation unit in dependence of the monitored rotational motion and in dependence of the monitored position of the first and second ends, such that content-rich information is presented on the information presentation unit and that content-poor information is presented across the first and second ends of the information presentation unit.
Having presented a method for controlling presentation of information by referring to the steps of figure 9, an information presentation device for presentation of information at least according to some embodiments will now be described.

An information presentation device according to some embodiments of the present invention comprises an information presentation unit and a presentation controlling unit for controlling of the presentation of information onto the information presentation unit. It should be pointed out that the presentation controlling unit 202 as depicted in figure 2, may be adapted to perform the method steps of the flow-chart as presented in figure 9. For this reason reference is made to figure 2.

The step of obtaining information for presentation on a display, may be performed by the transceiving unit 216. The step of determining the angular orientation of a device, thus disclosing the position of the display seam may be performed by the rotation detection unit 206 in connection with the angle determining and evaluating unit 208, under the control of the control unit 212. The subsequent step of analyzing obtained information for positions of text lines and line spacings, may be performed by the display controlling unit 210 in connection with the memory unit 214, under the control of the control unit 212.

Mapping of the obtained information onto the display can be performed by the display controlling unit in connection with the angle unit 208.

The step of determining whether there is an information and display seam overlap, may likewise be performed by the angle unit 208 in connection with the display controlling unit 210.

Again, the angle determining and evaluation unit may be called the angle unit.

The determination of forward and backward shift of the information position, in step 912 may be performed by the angle unit 208 again in connection with the display controlling unit 210. Shifting the information position may be performed by the display controlling unit 210 itself, just as the step of presenting information on display may be performed by the display 204.

As indicated above, the control unit 212 may be provided to control the function of the rotation detection unit 206, the angle unit 208, the display controlling unit 210 and the memory unit 214.

A few of these cited steps may however be performed by a unit different from the one described. The control unit may for instance have alternative tasks to perform. As the presentation controlling unit thus can be adapted to perform another method, additional control functions may be provided by the control unit according to at least some embodiments of the present invention.

According to some embodiments of the present invention it is hence provided an information presentation device for presentation of information, the information presentation device comprising at least one information presentation unit each having a first end and a second end, wherein the first and second ends are provided opposite to each other, and wherein the at least one information presentation unit is arranged to present information to a user, and a presentation controlling unit adapted to be connected to the at least one information presentation unit, said presentation controlling unit being arranged to control the presentation of the information on the at least one information presentation unit in dependence of the position of the first and the second opposing ends of the at least one information presentation unit and in dependence of physical rotation around an axis of rotation of the information presentation device.

The presentation controlling unit within the information presentation device may further be arranged determine the position on the information presentation unit, at which position the at least one content-rich information portion of the information is to be presented, in dependence of the detected physical rotation of the information presentation device and in dependence of the position of the first and the second opposing end of the at least one information presentation unit.

Moreover, the presentation controlling unit within the information presentation device may further be arranged to determine the position on the information presentation unit, at which position the at least one content-poor information portion of the information is to be presented, in dependence of the detected physical rotation of the information presentation device and in dependence of the position of the first and the second opposing end of the at least one information presentation unit.

In addition, the presentation controlling unit within the information presentation device may further be arranged to determine the position of the content-rich information portion and the position of the content-poor information portion, in order to present content-rich information portions on the information presentation unit and to position at least one content-poor information portion across the first and second ends of the information presentation unit, in dependence of the detected physical rotation of the information presentation device and in dependence of the position of the first and the second opposing end of the at least one information presentation unit.

In the following, presentation of information onto a display having a cylindrical shape is presented.

Figure 10 schematically presents data information 1000, comprising content-rich information portions 1002, as well as content-poor information portions 1004. The content-rich information portions may typically be information pieces such as text lines. The content-poor information portions may typically be information pieces such as line spacing, background, and may be characterised by the absence of, in some sense, real information.

However, as line spacing between text lines facilitates the reading of the text lines, it may be argued that line spacing comprises information also. For this reason a content-based approach can be used which is based on the amount of content in a portion of the information to be presented.

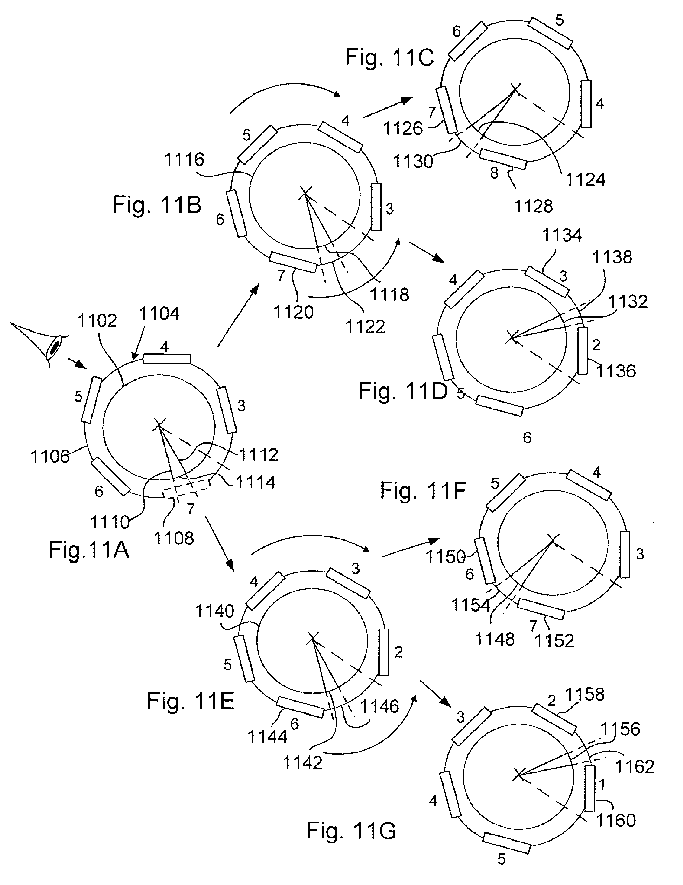

In figure 11A-11C, various views along a rotation axis of a cylindrical information presentation device are schematically illustrated.

In figure 11A it is illustrated a situation in which information virtually is to be presented on the information presentation unit of the information presentation device. In this situation it is detected that a content-rich information portion and seam of the information presentation unit overlap with each other. For this reason, the information is preferably not presented in this way, but rather that information is shifted in advance of presenting information on the information presentation unit.

The physical entity in the form of the information presentation unit in figure 11A is denoted by 1102. The information to be presented is denoted with 1104. This information comprises both content-poor information portions such as 1106, and content-rich information portions such as 1108.

The information presentation unit may cover substantially a full turn. In case of a relatively small range or region that is not covered by the information presentation unit, an upper end and a lower end of the information presentation unit may form a seam. These ends are typically oriented opposite to each other such as to face each other. A first end of the information presentation unit is denoted 1110 and a second end of the informations presentation unit is denoted 1112. The range in between said first and second ends is thus the seam that is denoted as 1114 in figure 11A.

In figure 11A it is further clearly illustrated that the content-rich information portion, 1108 and the seam 1114 overlap.

As such a situation is a problem, this may be resolved in the following two alternative solutions, which are presented.

One way of resolving such a situation may be to shift the information to be presented clock-wise. This is schematically illustrated in figure 11B, in which the information presentation unit is denoted by 1116. In figure 11B, the seam is denoted 1118 and one content-rich information portion 1120. It can be understood that the information is shifted a bit in the forward direction such as to circumvent and avoid overlap between content-rich information portions and the display seam.

It is also clearly seen that the information is shifted such as a content-poor information portion 1122 is positioned at the position of the seam. This would be to avoid interference by the display seam with the content-rich information portions. It can also be seen that the entire information is shifted a small amount in the clock-wise direction, including the content-rich information portions containing the content 3, 4, 5, 6 and 7, as illustrated in figure 11B.

Having resolved the overlap of a content-rich information portion and the seam, the information is rotated together with any rotation of the information presentation device. This is performed as long as the content-rich information does not overlap the display seam.

A clockwise or forward rotation of the information presentation device an angle that corresponds to the angle of one content-rich information portion and one content-poor information portion, provides an information presentation device in figure 11C in which there is no information overlap with the display seam. Over the seam 1124 is positioned a content-poor information portion 1130, whereas content-rich information portions 1126 and 1128 are positioned around the seam 1124 of the information presentation unit.

A counter clockwise rotation of the information presentation device as shown in figure 11B, may provide the information presentation device as shown in figure 11D, in which again no overlap exists between content-rich information portion and the display seam. The information is positioned such as to present a content-poor information portion at the position of the display seam. As above, the content-rich information portions 1134 and 1136 do not overlap with the seam 1132 but can be properly presented in the information presentation unit.

As alternative way to resolve the overlap situation of content-rich information portion and the display seam of figure 11A may be to shift the information counter clockwise, i.e. in a backward direction. The overlap situation as schematically presented in figure 11A can be seen to be resolved in figure 11E in which the content-rich information portions are shifted a certain rotational angle to resolve the overlap as shown in figure 11A. As seen from figure 11E, the seam 1142 of the information presentation unit does not overlap with the content-rich information portion 1144. Rather the seam is positioned as to overlap with a content-poor information portion 1146.

This provides the visible impression that the seam 1142 does not interfere with the presented information.

Similar to the case in figure 11B as presented above, the information presentation device may now be rotated clockwise giving the information presentation device of figure 11F or rotated counter clockwise giving the information presentation device of figure 11G. The information presentation device of these figures does not show any overlap between any content-rich information portion and the display seam, for the same reason as above, being that the information is rotated along with the information presentation device. In figure 11F a content-poor information portion 1154 is positioned at the seam 1148 of the display, and in figure 11G a content-poor information portion 1162 may be positioned at the seam 1156 of the display. The content-rich information portions 1150, 1152 and 1158, 1160 of figures 11F and 11G, respectively, can thus be presented on the information presentation unit, without having the respective seam interfering with the presentation.

It should be emphasized that the various embodiments as presented above can be combined with each other in a number of ways, thereby obtaining new embodiments that are not explicitly described above. Accordingly, an information presentation device according to the present invention may therefore be able to perform the method steps as illustrated in figures 5A and 5B, which method steps were initially described, as well as being able to perform the method steps of both figures 7A and 7B, in addition to the method steps of figure 9.

It is thus easy to understand that the embodiments come with a variety of advantages of which a few are:
Updating of the display can be limited to a small portion at a time.
List type information can appear as fixed to the display and will not jump as updating of information is performed, which is appreciable by a user since this updating will not be experienced as tiresome for a user's eyes.

Enabling changing the position of the selection area, can provide the advantage that a user can more easily make use of such functionality for, for instance, selecting data positioned within the selection area for further activities.

Information or the selection area may appear as fixed to the display, as an effect of small updating steps, and will hence not jump upon updating of the presentation of the information presentation unit. This is too much appreciated by a user since updated information and selection area will not be experienced as tiresome for a user's eyes.

A presentation of information on an essentially cylindrical information presentation unit that may substantially cover the entire turn can be provided in a way such that the seam may not interfere with the presented information. It is an advantage that information is presented such that display seams may not disturb the presented information, according to a number of embodiments of the present invention.

Another advantage of at least some embodiments of the present invention is an improved visual experience of the information to be presented, avoiding disturbance from the seam where two ends of the information presentation unit(s) meet.

In the case of a cylindrical information presentation device comprising several information presentation units, for instance by using non-flexible and non-bendable information presentation units, providing several seams, it is an advantage to present in the information dependent on the positions of respective seam such that content-poor information portions cover the seams, providing an effect of "hiding" the seams for a user.

It is emphasized that the present invention can be varied in many ways, of which the embodiments as presented are just a few examples. These embodiments are hence nonlimiting. The scope of the present invention is however, limited by the subsequently following claims.

## Claims

1. An information presentation device (100, 120, 140) for presentation of data information, the information presentation device comprising:
- a display (102, 122, 142, 204, 306) having an essentially cylindrical envelope surface, where the display further is arranged to present data information to a user, and
- a presentation controlling unit (202, 304) connected to the display (102, 122, 142, 204, 306), said presentation controlling unit being arranged to determine physical rotation around the axis of rotation of the information presentation device,
**characterized by**
that the display further has opposing first (150) and second (152) ends defining a substantially entire turn of the display, and that the presentation controlling unit (202, 304) is arranged to determine the a position of content-rich information, portion (606, 616, 626, 636, 1002) and a position of the content-poor information portion (1004), in order to present content-rich information portions (1002) on the display and to position at least one content-poor information portion (1004) across the first (150) and second ends (152) of the display, in dependence of the determined physical rotation around an axis of rotation of the information presentation device and in dependence of the position of the first (150) and the second (152) opposing ends of the display.

2. The information presentation device (120) according to claim 1, further comprises:
- a user input unit (104, 124, 144) for receiving user input, and wherein the presentation controlling unit (202, 304) further is arranged to present a selection area (108, 128) related to the presented information, wherein either the data information or the selection area is presented in dependence of physical rotation around an axis of rotation of the information presentation device, in dependence of user input.

3. The information presentation device (100, 120) according to claim 2, wherein the presentation controlling unit (202, 304) further is arranged to position the selection area (108, 128) in dependence of the determined rotation.

4. The information presentation device (100, 120, 140) according to any one of claim 1-3, wherein the presentation controlling unit (202, 304) further is arranged to shift out information from the display (102, 122, 142, 204, 306), and to shift in information to be display in dependence of the determined physical rotation of the information presentation device.

5. The information presentation device (100, 120) according to any one of claim 1-4, wherein the display (102, 122, 204, 306) comprises a substantially rotation symmetric shape around the axis of rotation, and where the display covers at least substantially the entire turn around the envelope surface of the rotation symmetric shape.

6. The information presentation device (100, 120, 140) according to claim 4 or 5, wherein the display (102, 122, 142, 204, 306) is arranged to present a site in relation to the presented information, where information may be shifted out from the display and shifted in to the display, in dependence of the rotation of the information presentation device.

7. The information presentation device (100, 120, 140) according to claim 6, wherein the position of the presented site on the display can be changed in relation to the rotation of the information presentation device.

8. The information presentation device (140) according to any one of claim 1-7, wherein one of the at least one display (142, 204, 206) has a substantially rotation symmetric shape around the axis of rotation, wherein the at least one display covers at least substantially the entire turn around the envelope surface of the rotation symmetric shape, in which the first (150) and second ends (152) of the at least one display defines the substantially entire turn.

9. The information presentation device (140) according to any one of claim 1-8, wherein the presentation controlling unit (202, 304) is arranged to disclose a position on the display (142, 204, 306) in relation to the presented information, at which position the presentation controlling unit is arranged to start presenting information, and arranged to stop presenting presented information, in dependence of the rotation of the information presentation device.

10. The information presentation device (100, 120, 140) according to any one of claims 1-9, wherein said information presentation device is comprised in a mobile phone (300).

11. A method, for controlling a display (102, 122, 142, 204, 306) adapted to present information, comprising the steps of:
- obtaining information (steps 502, 702, 902) to be presented on a display having an essentially cylindrical envelope surface,
- presenting information (steps 502, 706, 916) on the display,
- detecting or monitoring a rotational motion (steps 510, 710, 718, 912) around an axis of rotation of an information presentation device (140) comprising the display having the essentially cylindrical envelope surface, and
- providing the presented information (steps 526, 728, 916) on the display in dependence of the detected or monitored rotational motion,
such that information can be shifted out from the display and shifted in to the display,
**characterized in that**
the display in the step of obtaining information (steps 502, 702, 902) to be presented on a display, comprises opposing first (150) and second (152) ends defining a substantially entire turn of the display,
the method for controlling a display further comprises monitoring the position (step 718) of the first (150) and second opposing ends (152) of the display, wherein the step of providing the presented information comprises providing the presented information (steps 526, 728, 916) on the display in dependence of the monitored position of the first and second opposing ends,
such that content-rich information (606, 616, 626, 636, 1002) is presented on the display and that content-poor information (1004) is presented across the first and second ends of the display.

12. The method for controlling a display (122) according to claim 11, further comprising the steps of:
- presenting a selection area (108, 128; step 708) on the display (122),
- determining mode for updating information (step 712) on the display, in dependence of user input, and
wherein the step of providing information further comprises
- providing either the selected area (108, 123) at an updated position (step 728) on the display (122) or the presented information at an updated position on the display, in dependence of the detection of rotational motion and in dependence of obtained user input,
enabling the selection area (108, 128) or the information to rotate according to detected rotational motion around an axis of rotation of the information presentation device (120).

## Patentansprüche

1. Informationspräsentationsvorrichtung (100, 120, 140) zur Präsentation von Dateninformation, wobei die Informationspräsentationsvorrichtung umfasst:
- eine Anzeige (102, 122 ,142, 204, 306), welche eine im Wesentlichen zylindrische Mantelfläche aufweist, wobei die Anzeige weiter angeordnet ist, um einem Anwender Dateninformationen zu präsentieren, und
- eine Präsentationssteuereinheit (202, 304), welche mit der Anzeige (102, 122, 142, 204, 306) verbunden ist, wobei die Präsentationssteuereinheit angeordnet ist, um physikalische Rotation um die Rotationsachse der Informationspräsentationsvorrichtung zu bestimmen,
**dadurch gekennzeichnet,**
**dass** die Anzeige weiter gegenüberliegende erste (150) und zweite (152) Enden aufweist, die im Wesentlichen eine vollständige Umdrehung der Anzeige definieren, und dass die Präsentationssteuereinheit (202, 304) angeordnet ist, eine Position eines inhaltsreichen Informationsabschnitts (606, 616, 626, 636, 1002) und eine Position des inhaltsarmen Informationsabschnitts (1004) zu bestimmen, um inhaltsreiche Informationsabschnitte (1002) auf der Anzeige anzuzeigen und um zumindest einen inhaltsarmen Informätionsabschnitt (1004) über die ersten (150) und zweiten (152) Enden der Anzeige zu positionieren, in Abhängigkeit von der bestimmten physikalischen Rotation um die Rotationsachse der Informationspräsentationsvorrichtung und in Abhängigkeit von der Position von den ersten (150) und zweiten (152) gegenüberliegenden Enden der Anzeige.

2. Informationspräsentationsvorrichtung (120) nach Anspruch 1, weiter umfassend:
- ein Anwendereingabeeinheit (140, 124, 144) zum Empfangen von Anwendereingaben, und wobei die Präsentationssteuereinheit (202, 304) weiter angeordnet ist, einen auf die präsentierte Information bezogenen Auswahlbereich (108, 128) zu präsentieren,
wobei entweder die Dateninformation oder der Auswahlbereich in Abhängigkeit von physikalischer Rotation um die Rotationsachse der Informationspräsentationsvorrichtung abhängig von Anwendereingaben präsentiert wird.

3. Informationspräsentationsvorrichtung (100, 120) nach Anspruch 2, wobei die Präsentationssteuereinheit (202, 304) weiter angeordnet ist, den Auswahlbereich (108, 128) in Abhängigkeit von der bestimmten Rotation zu positionieren.

4. Informationspräsentationsvorrichtung (100, 120, 140) nach einem der Ansprüche 1-3, wobei die Präsentationssteuereinheit (202, 304) weiter angeordnet ist, aus der Anzeige (102, 122, 142, 204, 306) Information heraus zu verschieben und Information in die Anzeige hinein zu schieben in Abhängigkeit von der bestimmten physikalischen Rotation der Informationspräsentationsvorrichtung.

5. Informationspräsentationsvorrichtung (100, 120) nach einem der Ansprüche 1-4. wobei die Anzeige (102, 122, 142, 204, 306) eine im Wesentlichen rotationssymmetrische Form um die Rotationsachse umfasst, und wobei die Anzeige zumindest im Wesentlichen die vollständige Umdrehung um die Mantelfläche der rotationssymmetrischen Form bedeckt.

6. Informationspräsentationsvorrichtung (100, 120, 140) nach Anspruch 4 oder 5, wobei die Anzeige (102, 122, 142, 204, 306) angeordnet ist, eine Lage in Relation zu der präsentierten Information zu präsentieren, wobei Information aus der Anzeige heraus geschoben und in die Anzeige hinein geschoben werden kann in Abhängigkeit von der Rotation der Informationspräsentationsvorrichtung.

7. Informationspräsentationsvorrichtung (100, 120, 140) nach Anspruch 6, wobei die Position der präsentierten Stelle auf der Anzeige im Verhältnis zu der Rotation der Informationspräsentationsvorrichtung gewechselt werden kann.

8. Informationspräsentationsvorrichtung (140) nach einem der Ansprüche 1-7, wobei eine der mindestens einen Anzeige (142, 204, 206) eine im Wesentlichen rotationssymmetrische Form um die Rotationsachse aufweist, wobei die mindestens eine Anzeige zumindest im Wesentlichen die vollständige Umdrehung um die Mantelfläche der rotationssymmetrischen Form, in welcher die ersten (150) und zweiten (152) Enden der mindestens einen Anzeige die im Wesentlichen vollständige Umdrehung definieren, bedeckt.

9. Informationspräsentationsvorrichtung (140) nach einem der Ansprüche 1-8, wobei die Präsentationssteuereinheit (202, 304) angeordnet ist, eine Position auf der Anzeige (142, 204, 306) in Bezug auf die präsentierte Information zu offenbaren, an welcher Position die Präsentationssteuereinheit angeordnet ist, in Abhängigkeit der Rotation von der Informationspräsentationsvorrichtung das Präsentieren von Information zu starten und zu stoppen.

10. Informationspräsentationsvorrichtung (100, 120, 140) nach einem der Ansprüche 1-9, wobei die Informationspräsentationsvorrichtung von einem Mobiltelefon (300) umfasst ist.

11. Verfahren zur Steuerung einer Anzeige (102, 122, 142, 204, 306), welche zur Präsentation von Informationen angepasst ist, umfassend die Schritte:
- Erhalten von Information (Schritte 502, 702, 902), welche auf einer Anzeige, welche eine im Wesentlichen zylindrische Mantelfläche hat, zu präsentieren ist,
- Präsentieren von Information (Schritte 502, 706, 916) auf der Anzeige,
- Erfassen und Beobachten einer Drehbewegung (Schritte 510, 710, 718, 912) um eine Rotationsachse einer Informationspräsentationsvorrichtung (140), welche die Anzeige, welche die im Wesentlichen zylindrische Mantelfläche hat, umfasst, und
- Bereitstellen der präsentierten Information (Schritte 526, 728, 916) auf der Anzeige in Abhängigkeit von der erfassten oder überwachten Rotationsbewegung,
so dass Information aus der Anzeige heraus und in die Anzeige hinein geschoben werden kann,
**dadurch gekennzeichnet, dass**
die Anzeige in dem Schritt Erhalten von Information (Schritte 502, 702, 902), welche auf einer Anzeige zu präsentieren ist, gegenüberliegende erste (150) und zweite (152) Enden, welche im Wesentlichen eine vollständige Umdrehung der Anzeige definieren, umfasst, und
das Verfahren zur Steuerung einer Anzeige weiter Überwachen der Position (Schritt 718) der ersten (150) und zweiten (152) gegenüberliegenden Enden der Anzeige umfasst,
wobei der Schritt Bereitstellen der präsentierten Information Bereitstellen der präsentierten Information (Schritt 526, 728, 916) auf der Anzeige in Abhängigkeit von der überwachten Position der ersten und zweiten gegenüberliegenden Enden umfasst,
so dass inhaltsreiche Information (606, 616, 626, 636, 1002) auf der Anzeige präsentiert wird, und so dass inhaltsarme Information (1004) über die ersten und zweiten Enden der Anzeige präsentiert wird.

12. Verfahren zur Steuerung einer Anzeige (122) nach Anspruch 11, weiter umfassend die Schritte:
- Präsentieren eines Auswahlbereichs (108, 128; Schritt 708) auf der Anzeige (122),
- Bestimmen eines Modus zur Informationsaktualisierung (Schritt 712) auf der Anzeige in Abhängigkeit von Anwendereingaben, und
wobei der Schritt bereitstellen von Information weiter umfasst
- Bereitstellen entweder des Auswahlbereichs (108, 128) an einer aktualisierten Position (Schritt 728) auf der Anzeige (122) oder der präsentierten Information an einer aktualisierten Position auf der Anzeige, in Abhängigkeit von der Erfassung der Rotationsbewegung und in Abhängigkeit von erhaltenen Anwendereingaben,
wobei ermöglicht wird, dass der Auswahlbereich (108, 128) oder die Information gemäß der erfassten Rotationsbewegung um die Rotationsachse der Informationspräsentationsvorrichtung (120) rotieren kann.

## Revendications

1. Dispositif de présentation d'informations (100, 120, 140) propre à présenter des informations de données, le dispositif de présentation d'informations comprenant :
- un dispositif d'affichage (102, 122, 142, 204, 306) présentant une surface d'enveloppe essentiellement cylindrique, où le dispositif d'affichage est en outre agencé pour présenter des informations de données à un utilisateur, et
- une unité de commande de présentation (202, 304) reliée au dispositif d'affichage (102, 122, 142, 204, 306), ladite unité de commande de présentation étant agencée pour déterminer une rotation physique autour de l'axe de rotation du dispositif de présentation d'informations, **caractérisé en ce que**
le dispositif d'affichage possède en outre des première (150) et deuxième (152) extrémités opposées définissant un tour essentiellement complet du dispositif d'affichage, et **en ce que** l'unité de commande de présentation (202, 304) est agencée pour déterminer la position d'une partie d'informations (606, 616, 626, 636, 1002) riche en contenu et une position de la partie d'informations (1004) pauvre en contenu, afin de présenter des parties d'informations (1002) riches en contenu sur le dispositif d'affichage et pour positionner au moins une partie d'informations (1004) pauvre en contenu à travers les première (150) et deuxième (152) extrémités du dispositif d'affichage, selon la rotation physique déterminée autour d'un axe de rotation du dispositif de présentation d'informations et selon la position des première (150) et deuxième (152) extrémités opposées du dispositif d'affichage.

2. Dispositif de présentation d'informations (120) selon la revendication 1, comprenant en outre :
- une unité d'entrée utilisateur (104, 124, 144) destinée à recevoir une entrée utilisateur, et où l'unité de commande de présentation (202, 304) est en outre agencée pour présenter une zone de sélection (108, 128) relative aux informations présentées, où soit les informations de données ou la zone de sélection est présentée selon une rotation physique autour d'un axe de rotation du dispositif de présentation d'informations, selon une entrée utilisateur.

3. Dispositif de présentation d'informations (100, 120) selon la revendication 2, dans lequel l'unité de commande de présentation (202, 304) est en outre agencée pour positionner la zone de sélection (108, 128) selon la rotation déterminée.

4. Dispositif de présentation d'informations (100, 120, 140) selon l'une quelconque des revendications 1 à 3, dans lequel l'unité de commande de présentation (202, 304) est en outre agencée pour sortir des informations du dispositif d'affichage (102, 122, 142, 204, 306), et d'introduire des informations à afficher selon la rotation physique déterminée du dispositif de présentation d'informations.

5. Dispositif de présentation d'informations (100, 120) selon l'une quelconque des revendications 1 à 4, dans lequel le dispositif d'affichage (102, 122, 204, 306) comprend une forme de rotation essentiellement symétrique autour de l'axe de rotation, et où le dispositif d'affichage couvre au moins sensiblement le tour complet autour de la surface d'enveloppe de la forme symétrique de rotation.

6. Dispositif de présentation d'informations (100, 120 140) selon la revendication 4 ou 5, dans lequel le dispositif d'affichage (102, 122, 142, 204, 306) est agencé pour présenter un site par rapport aux informations présentées, où les informations peuvent être sorties du dispositif d'affichage et introduites dans le dispositif d'affichage, selon la rotation du dispositif de présentation d'informations.

7. Dispositif de présentation d'informations (100, 120, 140) selon la revendication 6, dans lequel la position du site présenté sur le dispositif d'affichage peut être modifiée en rapport avec la rotation du dispositif de présentation d'informations.

8. Dispositif de présentation d'informations (140) selon l'une quelconque des revendications 1 à 7, dans lequel l'un de l'au moins un dispositif d'affichage (142, 204, 206) a une forme de rotation sensiblement symétrique autour de l'axe de rotation, où l'au moins un dispositif d'affichage couvre au moins sensiblement le tour complet autour de la surface d'enveloppe de la forme symétrique de rotation, où les première (150) et deuxième (152) extrémités de l'au moins un dispositif d'affichage définissent le tour sensiblement complet.

9. Dispositif de présentation d'informations (140) selon l'une quelconque des revendications 1 à 8, dans lequel l'unité de commande de présentation (202, 304) est agencée pour révéler une position sur le dispositif d'affichage (142, 204, 306) en rapport avec les informations présentées, position à laquelle l'unité de commande de présentation est agencée pour commencer une présentation des informations, et agencée pour arrêter la présentation des informations présentées, selon la rotation du dispositif de présentation d'informations.

10. Dispositif de présentation d'informations (100, 120, 140) selon l'une quelconque des revendications 1 à 9, dans lequel ledit dispositif de présentation d'informations est inclus dans un téléphone mobile (300).

11. Procédé destiné à commander un dispositif d'affichage (102, 122, 142, 204, 306) adapté pour présenter des informations, comprenant les étapes qui consistent à :
- obtenir des informations (étapes 502, 702, 902) à présenter sur un dispositif d'affichage ayant une surface d'enveloppe essentiellement cylindrique,
- présenter les informations (étapes 502, 706, 916) sur le dispositif d'affichage,
- détecter ou surveiller un mouvement de rotation (étapes 510, 710, 718, 912) autour d'un axe de rotation d'un dispositif de présentation d'informations (140) comprenant le dispositif d'affichage ayant la surface d'enveloppe essentiellement cylindrique, et
- fournir les informations présentées (étapes 526, 728 916) sur le dispositif d'affichage selon le mouvement de rotation détecté ou surveillé,
de sorte que les informations puissent être sorties du dispositif d'affichage et introduites dans le dispositif d' affichage,
**caractérisé en ce que**
le dispositif d'affichage dans l'étape d'obtention d'informations (étapes 502, 702, 902) à présenter sur un dispositif d'affichage, comporte des première (150) et deuxième (152) extrémités opposées définissant un tour essentiellement complet du dispositif d'affichage,
le procédé destiné à commander un dispositif d'affichage comprend en outre le fait de surveiller la position (étape 718) des première (150) et deuxième (152) extrémités opposées du dispositif d'affichage, où l'étape qui consiste à fournir les informations présentées comprend la fourniture des informations présentées (étapes 526, 728, 916) sur le dispositif d'affichage selon la position des première et deuxième extrémités opposées,
de sorte que des informations riches en contenu (606, 616, 626, 636, 1002) soient présentées sur le dispositif d'affichage et que des informations pauvres en contenu (1004) soient présentés à travers les première et deuxième extrémités du dispositif d'affichage.

12. Procédé destiné à commander un dispositif d'affichage (122) selon la revendication 11, comprenant en outre les étapes qui consistent à :
- présenter une zone de sélection (108, 128; étape 708) sur le dispositif d'affichage (122),
- déterminer un mode pour mettre à jour des informations (étape 712) sur le dispositif d'affichage, selon une entrée utilisateur, et
dans lequel l'étape de fourniture des informations comprend le fait
- de fournir soit la zone sélectionnée (108, 128) à une position mise à jour (étape 728) sur le dispositif d'affichage (122) ou les informations présentées à une position mise à jour sur le dispositif d'affichage, selon la détection d'un mouvement de rotation et selon une entrée utilisateur obtenue,
de permettre à la zone de sélection (108 128) ou aux informations de pivoter selon un mouvement de rotation détecté autour d'un axe de rotation du dispositif de présentation d'informations (120).
